(19) Europäisches Patentamt
European Patent Office
Office européen des brevets

(11) EP 4 119 597 A1

(12) EUROPÄISCHE PATENTANMELDUNG

(43) Veröffentlichungstag:
**18.01.2023 Patentblatt 2023/03**

(21) Anmeldenummer: **22183473.2**

(22) Anmeldetag: **07.07.2022**

(51) Internationale Patentklassifikation (IPC):
***C08G 77/08*** *(2006.01)* ***C08G 77/10*** *(2006.01)*
***C08G 77/16*** *(2006.01)*

(52) Gemeinsame Patentklassifikation (CPC):
**C08G 77/16; C08G 77/08; C08G 77/10**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **14.07.2021 EP 21185525**

(71) Anmelder: **Evonik Operations GmbH**
**45128 Essen (DE)**

(72) Erfinder:
- **de Gans, Berend-Jan**
**45478 Mülheim an der Ruhr (DE)**
- **Favresse, Philippe**
**40880 Ratingen (DE)**
- **Knott, Wilfried**
**45355 Essen (DE)**
- **Dudzik, Horst**
**45326 Essen (DE)**
- **Johannes, Monika**
**45259 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **MOLEKULARGEWICHTSAUFBAU NIEDERMOLEKULARER ALPHA,OMEGA-POLYSILOXANDIOLE**

(57) Die Erfindung betrifft ein Verfahren zur Erhöhung des Molekulargewichts niedermolekularer α,ω-Polysiloxandiole, wobei die niedermolekularen α,ω-Polysiloxandiole in Gegenwart von Essigsäureanhydrid bei Temperaturen von 80 °C bis 220 °C, bevorzugt bei Temperaturen von 100 bis 200 °C und besonderes bevorzugt bei Temperaturen von 120 - 180 °C für 1h bis 24h, bevorzugt für 2h bis 16h und besonders bevorzugt für 3h bis 12h erhitzt werden, wobei die molare Menge der eingesetzten Silanolgruppen größer ist als die des eingesetzten Essigsäureanhydrids.



Processed by Luminess, 75001 PARIS (FR)

## Beschreibung

Die Erfindung betrifft ein Verfahren zur Erhöhung des Molekulargewichts niedermolekularer α,ω-Polysiloxandiole.

Polysiloxandiole, insbesondere α,ω-Polydimethylsiloxandiole, zählen seit den Anfängen der Silikonindustrie zu den häufig eingesetzten Vormaterialien und Zwischenprodukten. Insbesondere haben höhermolekulare Vertreter dieser Stoffgruppe Eingang in den flüssigen Silikonkautschuk LSR (liquid silicone rubber) genommen.

Polysiloxandiole, α,ω-Siloxandiole und α,ω-Polysiloxandiole werden hierin als Synonyme verwendet.

Die bei der Müller-Rochow-Synthese (Direktsynthese) gewonnenen Chlorsilane, insbesondere das Dimethyldichlorsilan, werden ausgeklügelten Hydrolyse und Kondensationsprozessen unterworfen und erschließen nach Abtrennung von Nebenprodukten den technischen Zugang zu Polydimethylsiloxandiolen. Hierbei üben die Prozesstemperatur, die eingesetzte Wassermenge, die Art des verwendeten Lösungsmittels sowie die Art und Menge eingesetzter Katalysatoren einen großen steuernden Einfluss aus. Obwohl man mit Hilfe optimierter Prozessparameter eine große Bandbreite von Kettenlängen abdecken kann, ist sowohl die gezielte Herstellung definiert kurzer als auch die Herstellung definiert langer α,ω-Siloxandiolketten eine Herausforderung geblieben. Diese Problematik entsteht bereits in der Chlorsilanhydrolyse, bei der hochkondensationsfähige =SiOH-Gruppen-tragende Spezies sehr leicht durch die als Nebenprodukt entstehende Salzsäure zu schwer vorhersehbaren Folgekondensaten abreagieren.

Die Herstellung kurzkettiger α,ω-Siloxandiole fokussierend, lehrt US 4,066,680 einen zweistufigen Prozess, bei dem im ersten Schritt ein Siloxan mit einem Säureanhydrid und mit einer Carbonsäure in Gegenwart einer sauren Bleicherde in ein lineares α,ω-Diacyloxy-siloxan umgewandelt wird, aus dem dann in einem zweiten Schritt durch Erhitzen mit einer schwachen wässrigen Base in ein α,ω-Siloxandiol gebildet wird. Als Edukte können zyklische Siloxane, aber auch lineare Siloxane, die aus Hydrolyse bzw. Co-Hydrolysen hervorgegangen sind (wie zum Beispiel Polydimethylsiloxandiole) sowie Acetoxygruppen bzw. OH-Gruppen-tragende Silane eingesetzt werden. Ein gravierender Nachteil, der in US 4,066,680 vertretenen Lehre besteht darin, dass der beschriebene Prozess erhebliche Mengen zyklischer Siloxane hervorbringt, wie es Example 2 ibid. mit Hilfe einer gaschromatographischen Analyse der Acetoxysiloxan-Zwischenstufe (= Produkt nach Stufe 1 vor der alkalischen Hydrolyse) verdeutlicht. Die Summe der dort ausgewiesenen Konzentrationen an $D_4$ (Octamethylcyclotetrasiloxan), $D_5$ (Decamethylcyclopentasiloxan) und $D_6$ (Dodecamethylcyclohexasiloxan) beträgt 25,48% oder aber, wenn man den Anteil der Essigsäure von 19,04% als Nicht-Siloxankomponente aus dem Gaschromatogramm herausrechnet, sogar 31,47%.

In Bezug auf die technische Zielsetzung, α,ω-Polysiloxandiole herzustellen, ist der Prozess somit gänzlich unselektiv und durch die Notwendigkeit, die zunehmend unter Ächtung stehenden zyklischen Siloxanen spätestens auf der Polysiloxandiol-Stufe abtrennen zu müssen, aufwendig und dementsprechend unwirtschaftlich.

Dem Gedanken einer ökofreundlichen Technologie verhaftet, die auch auf Organochlorsilane verzichtet, verfolgen A. Kalinia et al. in Silicon (2015) 7, 95 - 106 eine andere Strategie zur Herstellung von α,ω-dihydroxyfunktionellen Polydimethylsiloxanen. Die Autoren unterwerfen Diethoxy-dimethylsilan einer Polykondensation in Essigsäure und erhalten in Ausbeuten von bis zu 75% lineare α,ω-dihydroxyfunktionelle Polydimethylsiloxane neben zyklischen Siloxanen. Es wird deutlich, dass auch dieser moderne Prozess nicht zielführend ist

GB 899,938 beschreibt ein Verfahren zur Herstellung linearer Polysiloxane, die angeblich frei von zyklischen Siloxanen sind. Hierbei werden im ersten Schritt Acetoxysiloxane hergestellt, indem man Trimethylsilanole tropfenweise in eine Mischung bestehend aus Methylacetoxysilane, Pyridin und Toluol hinzugibt und dann mittels Vakuumdestillation die Acetoxysiloxane abtrennt. In einem zweiten Schritt wird diese mit hydroxyfunktionellen Siloxanen in Anwesenheit eines Amins respektive Ammoniumcarboxylats umgesetzt.

Die Nichtvorhersehbarkeit des Verknüpfungsverhaltens gereicht dem Einsatz von Aminen respektive Ammoniumcarboxylaten zum Nachteil. Außerdem können diese Substanzen, da sie unvorhersehbar polymerisationssteuernd beim Verbleib im Copolymer sind, dessen Eigenschaften bei Lagerung insbesondere unter wechselnden Temperaturbedingungen verändern. Hinzu kommt, dass in zahlreichen Anwendungsbereichen, und nicht nur bei Anwendungen mit Lebensmittelkontakt, die Anwesenheit von Aminen respektive Ammoniumcarboxylaten kritisch betrachtet wird. Bei der Lagerung derartig hergestellter Polysiloxane kann es zur Vergilbung oder sogar zur Bildung von zyklischen Siloxanen führen.

Auch die Verwendung von Dihexylaminen (Beispiel 8 der GB 899,938 beispielsweise) birgt eine Gefahr für Mensch und Umwelt, da Dihexylamin bekanntermaßen zu der Kategorie der akut toxischen Substanzen gehört. Hinsichtlich des Arbeitsschutzes und des Gesundheitsschutzes der Beschäftigten müssen Maßnahmen und Vorkehrungen bei der Handhabung mit Dihexylaminen aufgrund der Geruchsbelastung und Toxizität getroffen werden, was wiederum Aufwand und Kosten verursacht.

Vor diesem Hintergrund definiert sich die technische Aufgabe einen selektiven Prozess zu finden, der reproduzierbar die Herstellung höhermolekularer, im Wesentlichen zyklenfreier - α,ω-Polysiloxandiole gestattet sowie zumindest einen Nachteil des Standes der Technik überwindet.

Überraschenderweise wurde nun gefunden, dass man unter Überwindung der zuvor genannten Schwierigkeiten

zu im Wesentlichen zyklenfreien α,ω-Siloxandiolen gelangt, indem niedermolekulare α,ω-Polysiloxandiole in Gegenwart von Essigsäureanhydrid, wobei die molare Menge der Silanolgruppe größer ist als die des Essigsäureanhydrids, bei einer Temperatur von 80 °C bis 220 °C, bevorzugt 100 bis 200 °C und besonderes bevorzugt 120 - 180 °C für 1h bis 24h, bevorzugt 2h bis 16h und besonderes bevorzugt 3h bis 12h erhitzt werden.

Im Wesentlichen zyklenfrei bedeutet im Rahmen dieser Erfindung, dass der gaschromatographisch bestimmbare summarische Anteil bestehend aus Octamethylcyclotetrasiloxan ($D_4$), Dekamethylcyclopentasiloxan ($D_5$) und Dodekamethylcyclohexasiloxan ($D_6$) ≤ 0,15 Gewichtsprozent, bevorzugt ≤ 0,10 Gewichtsprozent bezogen auf den Gehaltsanteil des α,ω-Siloxandiols ausmacht.

Mit dem erfindungsgemäßen Verfahren ist es überraschenderweise möglich, höhermolekulare, im Wesentlichen zyklenfreie α,ω-Polysiloxandiole, ohne die Zugabe von Aminen oder eines Katalysators, herzustellen. Auch die vereinfachte Prozessführung im Sinne einer Verfahrensschrittreduzierung stellt einen weiteren erfindungsgemäßen Vorteil dar.

Höhermolekulare α,ω-Polysiloxandiole bedeutet im Sinne dieser Erfindung, dass das Endprodukt ein höheres zahlenmittleres Molekulargewicht aufweist als das des eingesetzten Edukts.

Das bevorzugte Essigsäureanhydrid weist eine Reinheit von größer 99%, besonders bevorzugt von größer 99,5% auf. Es kann jedoch auch jedes dem Fachmann bekanntes Essigsäureanhydrid verwendet werden.

Es ist erfindungsgemäß bevorzugt, dass das molare Verhältnis eingesetzter Silanol-Gruppen zu Essigsäureanhydrid 2,00 zu 1,00 oder bevorzugt 2,00 zu < 1,00 beträgt.

Zur Sicherstellung des erfindungsgemäß angestrebten stöchiometrischen Verhältnisses bedient man sich der $^{29}$Si-NMRSpektroskopie, die die Bestimmung des zahlenmittleren Molekulargewichtes des jeweiligen α,ω-Polydimethylsiloxandiols erlaubt. Bei einer chemischen Verschiebung von -10,7 ppm liegt das charakteristische Signal für eine Silanolgruppe (D-OH-Einheit). Die Signalgruppe der unmodifizierten D-Einheiten liegt im Verschiebungsbereich bei -20 bis -23 ppm. Das zahlenmittlere Molekulargewicht Mn kann nun anhand folgender Formel bestimmt werden,

$$M_n = 2M_{D-OH} + 2\frac{I_D}{I_{D-OH}}M_D$$

wobei I den Integralwert des jeweiligen Signals darstellt. Das Molekulargewicht einer D-Einheit beträgt $M_D$ = 74,1 g.mol$^{-1}$ und das Molekulargewicht einer D-OH-Einheit $M_{D-OH}$= 83,1 g.mol$^{-1}$, wobei im letzten Fall rein rechnerisch davon ausgegangen wird, dass die halbe atomare Masse eines Sauerstoffatoms zum Molekulargewicht einer D-OH-Einheit gezählt werden darf.

Bevorzugt wird das erfindungsgemäße Verfahren unter inerten Bedingungen, vorzugsweise wasserfrei und besonders bevorzugt unter Schutzgasbeschleierung durchgeführt. Hierfür eignen sich zum Beispiel trockener Stickstoff oder Argon.

Bevorzugt wird das Reaktionsgemisch nach der Reaktion neutralisiert.

Wenn das gewünschte Molekulargewicht erreicht ist, kann das Endprodukt vorzugsweise zur Entfernung von Spuren von Essigsäureanhydrid beziehungsweise Umsetzung von eventuellen endständigen Acetoxygruppen mit einer schwachen Base neutralisiert werden. Geläufige Basen sind den Fachmann bekannt. Beispielsweise seien hier die Ammonium-, Natrium-, Kalium-, Calcium- und Magnesium-Sälze des Hydrogencarbonatons, des Carbonations des Hydrogenphosphat-Ions und des Phosphat-Ions genannt. Auch gasförmiges Ammoniak kann zur Neutralisation verwendet werden.

Vorzugsweise genügen die linearen α,ω-Polysiloxandiole zumindest der Formel (I):

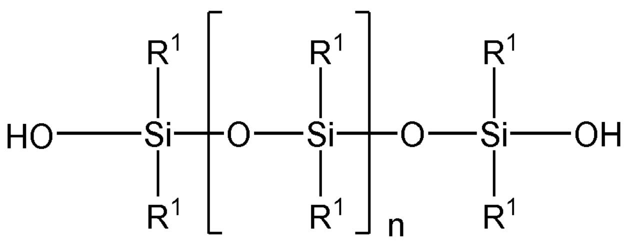

(I)

mit $R^1$ gleich Alkylrest und/oder aromatischer Rest, umfassend 1 bis 10 C-Atome, bevorzugt ein Methylrest und mit 10 ≤ n ≤10.000, bevorzugt n zwischen 30 und 3.000, besonders bevorzugt n zwischen 100 und 1.000.

Besonders bevorzugt handelt es sich bei den niedermolekularen α,ω-Polysiloxandiolen um α,ω-Polydimethylsiloxandiole.

Bevorzugt wird das Endprodukt abgekühlt und filtriert.

Vorzugsweise wird die Zunahme des zahlenmittleren Molekulargewichts des Endprodukts mittels der $^{29}$Si-NMR Spektroskopie bestimmt.

Ein weiterer Gegenstand der Erfindung ist die Verwendung des Endprodukts erhältlich nach dem erfindungsgemäßen Verfahren als Rohstoff für weitere chemische Synthesen, wie z. B. für die Herstellung von Kautschuk, Schmieröl, Entschäumer, Thermalöl, Dichtmassen und Klebstoffen und zur Funktionalisierung von Oberflächen und Partikeln.

Die folgenden Beispiele dienen dem Fachmann allein zur Erläuterung dieser Erfindung und stellen keinerlei Beschränkung des beanspruchten Gegenstands oder des beanspruchten Verfahrens dar.

## Methoden

### Kernspinresonanz (NMR)

NMR-Spektren wurden an einem Avance III 400 Spektrometers der Firma Bruker aufgenommen. Die $^{29}$Si-NMR Spektren wurden an einem PA BBO 400Si BB-H-D-10 z Probenkopf der Firma Bruker, bei einer Frequenz von 79,495 MHz gemessen. Die Messzeit betrug dabei 2,569 Sekunde pro Scan, bei insgesamt 512 Scans pro Spektrum. Das $^{29}$Si-NMR Spektrum diente der Bestimmung des zahlenmittleren Molekulargewichtes des jeweiligen $\alpha,\omega$-Polydimethylsiloxandiols. Das charakteristische Signal einer Silanolgruppe (D-OH-Einheit) liegt bei -10,7 ppm. Die Signalgruppe der unmodifizierten D-Einheiten liegt im Verschiebungsbereich bei -20 bis -23 ppm. Das zahlenmittlere Molekulargewicht $M_n$ kann nun anhand folgender Formel bestimmt werden,

$$M_n = 2M_{D-OH} + 2\frac{I_D}{I_{D-OH}}M_D$$

wobei *I* den Integralwert des jeweiligen Signals darstellt. Das Molekulargewicht einer D-Einheit beträgt $M_D$ = 74,1 gmol$^{-1}$ und das Molekulargewicht einer D-OH-Einheit $M_{D\text{-}OH}$ = 83,1 gmol$^{-1}$.

### Gaschromatographie (GC)

Die Gaschromatogramme werden an einem GC-Gerät des Typs GC 7890B der Fa. Agilent Technologies ausgestattet mit einer Säule vom Typ HP-1; 30m × 0,32mm ID × 0,25$\mu$m dF (Agilent Technologies Nr. 19091Z-413E) und Wasserstoff als Trägergas mit folgenden Parametern aufgenommen:

- Detektor: FID; 310°C
- Injektor: Split; 290°C
- Mode: constant flow 2 mL/min
- Temperaturprogramm: 60°C mit 8°C/min -150°C mit 40°C/min - 300°C 10 min.

Zur Sicherstellung des erfindungsgemäß angestrebten molaren Verhältnisses der Reaktanden bedient man sich der $^{29}$Si-NMR-Spektroskopie, die die sichere Bestimmung des zahlenmittleren Molekulargewichtes des jeweiligen $\alpha,\omega$-Polydimethylsiloxandiols erlaubt. Bei einer chemischen Verschiebung von -10,7 ppm liegt das charakteristische Signal für eine Silanolgruppe (D-OH-Einheit). Die Signalgruppe der unmodifizierten D-Einheiten liegt im Verschiebungsbereich bei -20 bis -23 ppm. Das zahlenmittlere Molekulargewicht Mn kann nun anhand folgender Formel bestimmt werden,

$$M_n = 2M_{D-OH} + 2\frac{I_D}{I_{D-OH}}M_D$$

wobei I den Integralwert des jeweiligen Signals darstellt. Das Molekulargewicht einer D-Einheit beträgt $M_D$ = 74,1 g.mol$^{-1}$ und das Molekulargewicht einer D-OH-Einheit $M_{D\text{-}OH}$= 83,1 g.mol$^{-1}$, wobei im letzten Fall rein rechnerisch davon ausgegangen wird, dass die halbe atomare Masse eines Sauerstoffatoms zum Molekulargewicht einer D-OH-Einheit gezählt werden darf. Das so ermittelte Molekulargewicht stellt die erfindungsgemäße Bezugsgröße für die einzusetzende Menge an Essigsäureanhydrid dar.

**Weitere Bedingungen**

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden in den nachfolgenden Beispielen Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa einer Temperatur von 23 °C und der umgebenden relativen Luftfeuchtigkeit von ca. 40 % ermittelt.

**Materialien und Geräte**

α,ω-Polydimethylsiloxandiol (PDM-Siloxan), Fa. Dow
Essigsäureanhydrid, Fa. Merck
Natriumhydrogencarbonat, Fa. Sigma-Aldrich
Natriumcarbonat anhydrous, Fa. Sigma-Aldrich
Trifluormethansulfonsäure, Fa. Sigma-Aldrich
Aluminiumacetat, basisch, Fa. Sigma-Aldrich

**Beispiele**

**Beispiel 1 (erfindungsgemäß)**

In einem 500 mL Vierhalskolben wurden 200,00 g α,ω-Polydimethylsiloxandiol der Charge A (entsprechend 0,157 mol Silanol-Gruppen) und 8,03 g Essigsäureanhydrid (0,079 mol) unter Rühren gemischt, was einem molaren Verhältnis von Silanol zu Anhydrid von 1,99 zu 1,00 entspricht. Die Reaktionsmischung wurde unter weiterem Rühren unter Stickstoffinertisierung für die Dauer von 12 Stunden auf 100 °C erhitzt. Anschließend wurde der Reaktionsansatz auf 80 °C abgekühlt und mit 4,16 g Natriumhydrogencarbonat neutralisiert. Nach 2 Stunden des Nachrührens ließ man das Produkt auf Raumtemperatur abkühlen und trennte die Feststoffanteile durch Filtration über einen Faltenfilter ab. Das isolierte Endprodukt ist klar und farblos. Das zahlenmittlere Molekulargewicht wurde anhand des $^{29}$Si-NMR Spektrums (siehe Fig. 1) und der Gehalt an $D_4$, $D_5$ und $D_6$ per GC bestimmt. Die Ergebnisse sind in der Tabelle 1 zusammengefasst. Wie aus den Daten in Tabelle 1 hervorgeht, wurde das Molekulargewicht des ursprünglichen PDM-Siloxans nahezu vervierfacht. Der summarische Anteil an $D_4$, $D_5$ und $D_6$ lag < 0,15%.

**Beispiel 2 (erfindungsgemäß)**

In einem 500 mL Vierhalskolben wurden 300,00 g α,ω-Polydimethylsiloxandiol der Charge B (entsprechend 0,2007 mol Silanol-Gruppen) und 10,25 g Essigsäureanhydrid (0,1004 mol) unter Rühren gemischt, so dass ein molares Verhältnis Silanol zu Anhydrid von 2,00 zu 1,00 gewählt wurde. Die Reaktionsmischung wurde unter Stickstoffatmosphäre und unter weiterem Rühren für insgesamt 6 Stunden auf 150 °C erhitzt. Anschließend wurde die Temperatur auf 80 °C gesenkt und mit 4,16 g Natriumhydrogencarbonat neutralisiert. Nach 2 weiteren Stunden des Nachrührens wurde das Produkt auf Raumtemperatur abgekühlt und filtriert. Das Endprodukt ist klar und farblos. Das zahlenmittlere Molekulargewicht wurde mit Hilfe der $^{29}$Si-NMR Spektroskopie und der Gehalt an $D_4$, $D_5$ und $D_6$ per GC bestimmt. Die Ergebnisse sind in der Tabelle 1 zusammengefasst. Wie aus den Daten in Tabelle 1 hervorgeht, wurde das Molekulargewicht des ursprünglichen PDM-Siloxans nahezu versechsfacht. Der summarische Anteil an $D_4$, $D_5$ und $D_6$ lag < 0,10%.

**Beispiel 3 (nicht erfindungsgemäß)**

In einem 500 mL Vierhalskolben wurden 300,00 g α,ω-Polydimethylsiloxandiol der Charge B und 0,36 g Trifluormethansulfonsäure als Katalysator unter Rühren gemischt und bei einem Druck von 50 mbar für die Dauer von 12 Stunden auf 150 °C erhitzt. Anschließend wurde der Reaktionsansatz auf 80 °C abgekühlt und mit 8,8 g des wasserfreien Natriumcarbonats neutralisiert. Nach 2 weiteren Stunden des Nachrührens wurde der Reaktionsansatz auf Raumtemperatur abgekühlt und über einen Faltenfilter filtriert. Das gewonnene Filtrat ist klar und farblos. Dessen zahlenmittleres Molekulargewicht wurde mit Hilfe der $^{29}$Si-NMR Spektroskopie und der Gehalt an $D_4$, $D_5$ und $D_6$ per GC bestimmt. Die Ergebnisse sind in der Tabelle 1 zusammengefasst. Es zeigte sich, dass substanzielle Mengen an zyklischen Siloxanen gebildet wurden.

**Beispiel 4 (nicht erfindungsgemäß)**

In einem 500-mL-Vierhalskolben wurden 300,00 g α,ω-Polydimethylsiloxandiol der Charge B und 0,020 g basisches Aluminiumacetat als Katalysator unter Rühren gemischt und bei einem Unterdruck von 60 mbar für insgesamt 15 Stunden auf 150 °C erhitzt. Anschließend wurde der Reaktionsansatz abgekühlt und filtriert. Das erhaltene Filtrat ist klar und farblos. Das zahlenmittlere Molekulargewicht des Endprodukts wurde mit Hilfe der $^{29}$Si-NMR Spektroskopie und der Gehalt an $D_4$, $D_5$ und $D_6$ per GC bestimmt. Die Ergebnisse sind in der Tabelle 1 zusammengefasst. Es zeigte sich, dass substanzielle Mengen an zyklischen Siloxanen gebildet wurden.

**Tabelle 1: Molekulargewichte und zyklische Siloxane**

| Probe | Mn/g.mol$^{-1}$ | D4 | D5 | D6 | Σ (D4+D5+D6) |
|---|---|---|---|---|---|
| PDM Charge A | 2543 | < 0,02 | < 0,02 | 0,02 | < 0,06 |
| PDM Charge B | 2990 | < 0,02 | < 0,02 | 0,02 | < 0,06 |
| Beispiel 1 | 10681 | 0,02 | 0,02 | 0,07 | 0,11 |
| Beispiel 2 | 17823 | 0,02 | 0,03 | 0,04 | 0,09 |
| Beispiel 3 (nicht erf. gemäß) | 12483 | 0,27 | 0,06 | 0,05 | 0,38 |
| Beispiel 4 (nicht erf. gemäß) | 18334 | 0,32 | 0,07 | 0,08 | 0,47 |

Alle Angaben der zyklischen Siloxane D4, D5 und D6 sind in Gew.-%.

## Patentansprüche

1. Verfahren zur Erhöhung des Molekulargewichts niedermolekularer α,ω-Polysiloxandiole, **dadurch gekennzeichnet, dass** die niedermolekularen α,ω-Polysiloxandiole in Gegenwart von Essigsäureanhydrid bei Temperaturen von 80 °C bis 220 °C, bevorzugt bei Temperaturen von 100 bis 200 °C und besonderes bevorzugt bei Temperaturen von 120 - 180 °C für 1h bis 24h, bevorzugt für 2h bis 16h und besonders bevorzugt für 3h bis 12h erhitzt werden, wobei die molare Menge der eingesetzten Silanolgruppen größer ist als die des eingesetzten Essigsäureanhydrids.

2. Verfahren nach Anspruch 1, **dadurch gekennzeichnet, dass** das molare Verhältnis von Silanol-Gruppen zu Essigsäureanhydrid 2,00 zu 1,00 oder bevorzugt 2,00 zu < 1,00 beträgt.

3. Verfahren nach einem der vorgenannten Ansprüche, **dadurch gekennzeichnet, dass** man es unter inerten Bedingungen, vorzugsweise wasserfrei und besonders bevorzugt unter Schutzgasbeschleierung durchführt.

4. Verfahren nach einem der vorgenannten Ansprüche, **dadurch gekennzeichnet, dass** man das Reaktionsgemisch nach der Reaktion neutralisiert.

5. Verfahren nach einem der vorgenannten Ansprüche, **dadurch gekennzeichnet, dass** die linearen α,ω-Polysiloxandiole zumindest der Formel (I) genügen:

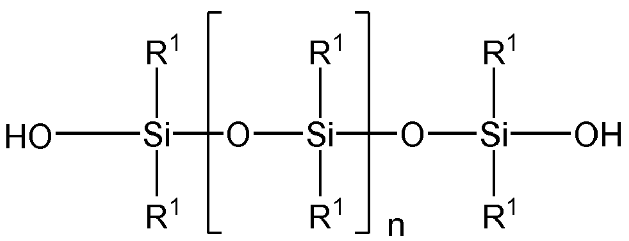

(I)

mit $R^1$ gleich Alkylrest und/oder aromatischer Rest, umfassend 1 bis 10 C-Atome, bevorzugt ein Methylrest und mit $10 \le n \le 10,000$, bevorzugt n zwischen 30 und 3,000, besonders bevorzugt n zwischen 100 und 1000.

**6.** Verfahren nach einem der vorgenannten Ansprüche, **dadurch gekennzeichnet, dass** man das Endprodukt abkühlt und filtriert.

**7.** Verfahren nach einem der vorgenannten Ansprüche, **dadurch gekennzeichnet, dass** man die Zunahme des zahlenmittleren Molekulargewichts des Endprodukts mittels der $^{29}Si$-NMR Spektroskopie bestimmt.

**8.** Verwendung des Endprodukts hergestellt nach einem der Ansprüche 1 - 7 als Rohstoff für die Herstellung von Kautschuk, Schmieröl, Entschäumer, Thermalöl, Dichtmassen und Kleber sowie zur Funktionalisierung von Oberflächen und Partikeln.

Fig. 1

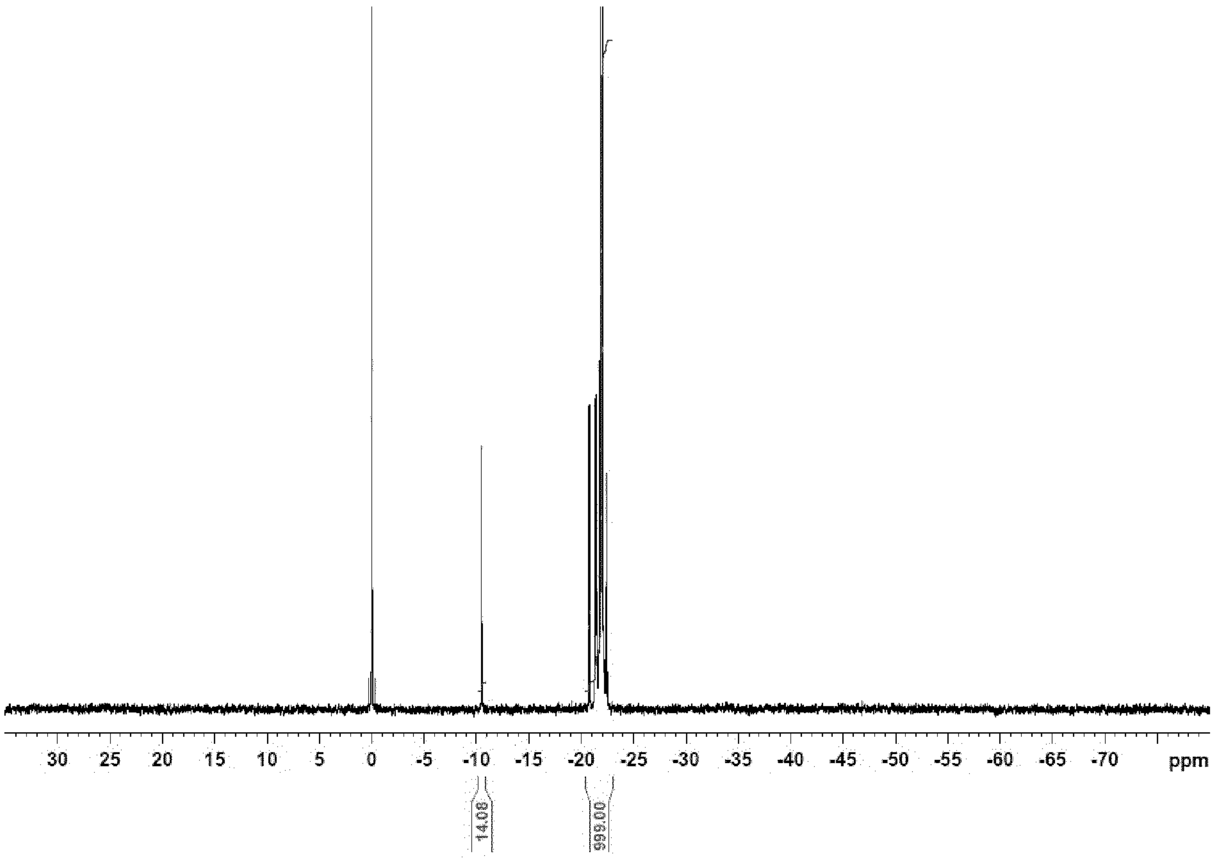
30
25
20
15
10
5
0
-5
-10
-15
-20
-25
-30
-35
-40
-45
-50
-55
-60
-65
-70
ppm
14.08
999.00

Europäisches Patentamt
European Patent Office
Office européen des brevets

# EUROPÄISCHER RECHERCHENBERICHT

Nummer der Anmeldung
EP 22 18 3473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 105 885 051 A (HUBEI XINHAIHONG CHEMICAL CO LTD) 24. August 2016 (2016-08-24) * Ansprüche 1-6 * * Absatz [0009] - Absatz [0076] * ----- | 1-7 | INV. C08G77/08 C08G77/10 C08G77/16 |
| X | KR 2017 0124997 A (KCC CORP [KR]) 13. November 2017 (2017-11-13) * Absätze [0009] - [0016] * ----- | 8 | |
| X | CN 104 109 245 A (HE SHAOYUN) 22. Oktober 2014 (2014-10-22) * Absatz [0002] - Absatz [0009] * ----- | 8 | |

RECHERCHIERTE SACHGEBIETE (IPC)

C08G

Der vorliegende Recherchenbericht wurde für alle Patentansprüche erstellt

1

| Recherchenort | Abschlußdatum der Recherche | Prüfer |
|---|---|---|
| Den Haag | 8. Dezember 2022 | Stinchcombe, John |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 22 18 3473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2022

| Im Recherchenbericht angeführtes Patentdokument | Datum der Veröffentlichung | Mitglied(er) der Patentfamilie | Datum der Veröffentlichung |
|---|---|---|---|
| CN 105885051 A | 24-08-2016 | KEINE | |
| KR 20170124997 A | 13-11-2017 | KEINE | |
| CN 104109245 A | 22-10-2014 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4066680 A
- GB 899938 A


### In der Beschreibung aufgeführte Nicht-Patentliteratur


- **A. KALINIA et al.** *Silicon,* 2015, vol. 7, 95-106